# EUROPÄISCHE PATENTSCHRIFT

(11) **EP 0 839 879 B1**
(45) Veröffentlichungstag und Bekanntmachung des Hinweises auf die Patenterteilung: **18.06.2003**
(21) Anmeldenummer: 97118192.0
(22) Anmeldetag: 20.10.1997
(51) Int. Cl.: C09D 11/00, C09B 67/20, B01F 17/00, C07C 69/34

(54) **Verwendung von Pigmentpreparationen für den Ink-Jet Druck**
Use of pigment preparations for ink-jet printing
Utilisation de préparations pigmentaires pour l'impression par jet d'encre

(30) Priorität: 31.10.1996 DE 19644077; 25.03.1997 DE 19712486
(43) Veröffentlichungstag der Anmeldung: 06.05.1998
(60) Teilanmeldung: 02008143.6
(73) Patentinhaber: BAYER AG, 51368 Leverkusen (DE)
(72) Erfinder: Nyssen, Roger, 41542 Dormagen (DE); Pfützenreuter, Dirk, 51377 Leverkusen (DE); Richter, Rolf, Dr., 51573 Leverkusen (DE); Puchner, Fritz, Dr., 50996 Köln (DE); Hassenrück, Karin, Dr., 40468 Düsseldorf (DE)

(56) Entgegenhaltungen:
- EP-A- 0 074 515
- EP-A- 0 143 077
- EP-A- 0 424 759
- EP-A- 0 510 436
- EP-A- 0 735 109
- DE-A- 3 641 677

## Beschreibung

Die Erfindung betrifft die Verwendung von Pigmentpräparationen spezieller organischer Pigmente als Drucktinten für den Ink-Jet Druck sowie neue Pigmentpräparationen und Dispergiermittel.

Wäßrige Drucktinten für den Tintenstrahldruck sind sowohl auf Basis wasser-löslicher organischer Farbstoffe als auch auf Basis organischer Farbpigmente an sich bekannt und in vielen Veröffentlichungen beschrieben. Gegenüber den löslichen Farbstoffen liefern Pigmente generell eine verbesserte Lichtechtheit der erhaltenen Ausdrucke; allerdings ist auch bekannt, daß die Ink-Jet Drucke der meisten Pigmente nicht die gleiche Brillanz erreichen wie Farbstoffe. Zwar kann die Brillanz der Drucke durch eine besonders hohe Feinverteilung der Pigmentpartikel verbessert werden, damit einher geht jedoch in der Regel ein Verlust an Lichtechtheitseigenschaften (vgl. Herbst, Hunger: Industrielle Organische Pigmente, VCM, Verlagsgesellschaft, Weinheim (1987), S. 135-136).

Gemäß EP-A-633 142 kann die Brillanz beispielsweise durch Wahl geeigneter Additive für die Tinten oder durch Wahl geeigneter Drucksubstrate wie beispielsweise entsprechend beschichteter Papiere verbessert werden. Das Problem sowohl brillante als auch lichtechte Pigmente für den Ink-jet Druck bereitzustellen, ist jedoch vom Stand der Technik noch nicht befriedigend gelöst worden. Dies gilt insbesondere für den Farbtonbereich gelb.

Trotz der Vielzahl der Veröffentlichungen ist die obengenannte Aufgabe noch nicht befriedigend gelöst worden. Im übrigen werden nur in einigen wenigen Dokumenten Beispiele von Gelbpigmenten aufgeführt, die in ihrer Lichtechtheitseigenschaft für den konventionellen Ink-Jet Druck zwar grundsätzlich geeignet sind, die jedoch für hochwertigere Einsatzgebiete des Ink-Jet Drucks, beispielsweise fotografische Bildreproduktionen (Fotoreproduktion, z.B. Anwendung Außenbereich, oder Display), den dort geforderten Lichtechtheitseigenschaften nicht genügen (EP 518 225).

Die Erfindung betrifft daher die Verwendung von Pigmentpräparationen als Drucktinten für den Ink-Jet Druck, enthaltend
a) Wasser
b) Dispergiermittel und
c) mindestens ein Pigment aus der Gruppe der durch Methin- oder Azogruppen-haltigen Reste substituierten Barbitursäure oder deren Derivate, wobei das Pigment gegebenenfalls in Form eines Salzes, Komplexes, als feste Lösung, als Einschlußverbindung oder als Interkalationsverbindung vorliegt.

In einer besonders bevorzugten Ausführungsform wird als Komponente
c) mindestens ein Pigment der Formeln (I) bis (III) oder deren tautomeren Formen eingesetzt. 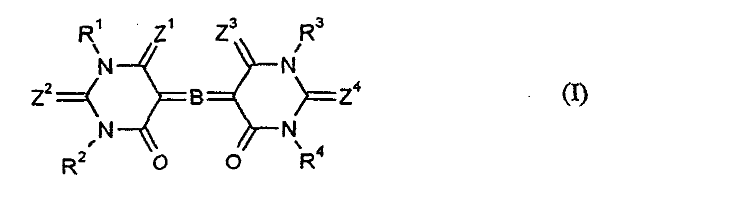 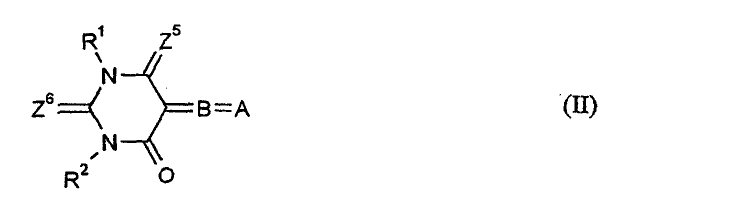 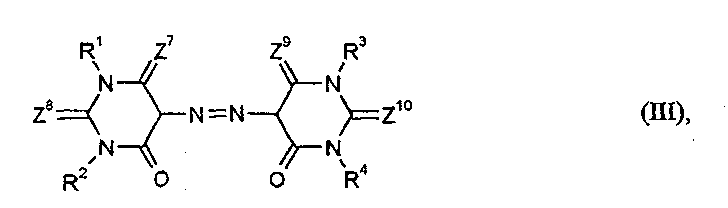
worin
- R¹, R², R³ und R⁴: unabhängig voneinander für Wasserstoff, Alkyl, insbesondere C₁-C₆-Alkyl, Cycloalkyl, insbesondere C₅-C₈-Cycloalkyl, Aryl, insbesondere gegebenenfalls substituiertes Phenyl, Aralkyl, insbesondere C₆-C₁₀-Aryl-C₁-C₄-Alkyl, wie Benzyl oder Ethyl-Phenyl, oder Hetaryl stehen,
- B: den Rest eines Isoindolins der Formel 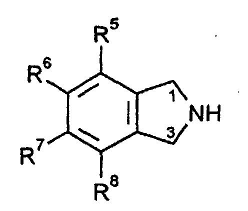 bedeutet, wobei die Verknüpfung mit den beiden Doppelbindungen in der 1- und 3-Position des Isoindolenins erfolgt, und
R⁵, R⁶, R⁷ und R⁸ unabhängig voneinander für Wasserstoff, Halogen, insbesondere F, Cl und Br, C₁-C₆-Alkyl, C₁-C₆-Alkoxy oder C₆-C₁₀-Aryloxy stehen,
- A: den Rest eines Cyanmethylens der Formel 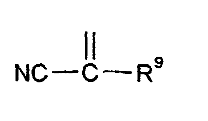 bedeutet, worin
R⁹ für einen elektronenanziehenden Rest steht und
- Z¹ bis Z¹⁰: unabhängig voneinander für O oder NR¹⁰ stehen,
worin
- R¹⁰: für Wasserstoff oder Cyan steht.

Die Pigmente der Formel (I) sind beispielsweise aus DE-A-39 35 858 bekannt, die der Formel (II) beispielsweise aus US-A-5.177.209 und die der Formel (III) beispielsweise aus EP-A-74 515 bekannt.

Bevorzugte Pigmente der Formel (I) sind symmetrische Isoindolin-Pigmente, die der Formel (IV) entsprechen 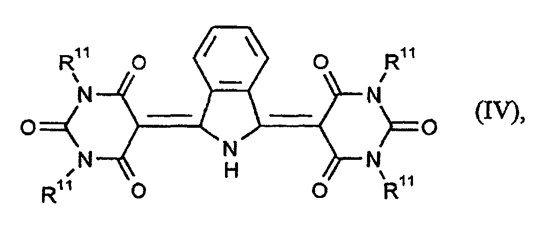 worin
- R¹¹: Wasserstoff, C₁-C₆-Alkyl oder Phenyl bedeutet.

Ganz besonders bevorzugte Pigmente der Formel (I) entsprechen der Formel (IV), worin R¹¹ für Wasserstoff steht.

Vorzugsweise steht R⁹ für einen Rest, dessen Hammett'sche Substituentenkonstante σ (para) >0 ist. Eine entsprechende Auflistung von Hammett'schen Substituentenkonstanten findet sich z.B. in Sykes, Reaktionsmechanismen der organischen Chemie, 9. Auflage, Weinheim, VCM Verlagsgesellschaft, 1988, oder kann nach bekannten Verfahren bestimmt werden.

Bevorzugte Pigmente der Formel (II) sind unsymmetrische Isoindolin-Pigmente der Formel (V) 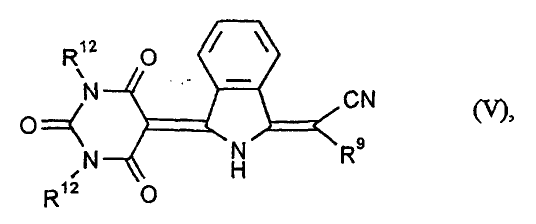 worin
- R⁹: CN, gegebenenfalls durch C₁-C₆-Alkyl, C₅-C₇-Cycloalkyl, Aralkyl, insbesondere C₆-C₁₀-Aryl-C₁-C₄-alkyl, oder C₆-C₁₀-Aryl substituiertes Aminocarbonyl, insbesondere CONHCH₃, C₁-C₆-Alkoxycarbonyl, C₆-C₁₀-Aryloxycarbonyl oder Hetaryl, insbesondere einen Rest der Formel (VI) oder (VII) bedeutet 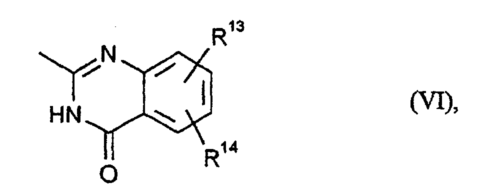 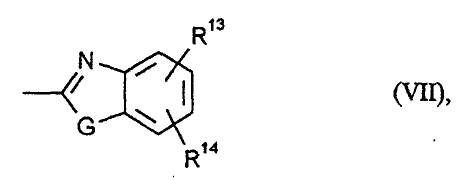
worin
- R¹³ und R¹⁴: unabhängig voneinander Wasserstoff, Halogen, insbesondere Cl, Br und F, C₁-C₆-Alkyl, C₁-C₆-Alkoxy oder C₁-C₆-Alkoxycarbonyl bedeuten oder
- R¹³ und R¹⁴: zusammen den Rest eines ankondensierten Benzolringes bedeuten
- G: für O, S, NH oder N(C₁-C₄-Alkyl) steht,
und
- R¹²: Wasserstoff, C₁-C₆-Alkyl oder Phenyl bedeutet

Ganz besonders bevorzugte Pigmente der Formel (V) sind solche, worin R⁹ für CONHCH₃ steht und R¹² die obengenannte Bedeutung hat, insbesondere solche, worin R⁹ für CONHCH₃ und R¹² für Wasserstoff steht.

Bevorzugte Pigmente sind Salze, Komplexe, Einschlußverbindungen, feste Lösungen sowie Interkalationsverbindungen der Formel (III). Solche sind beispielsweise aus EP-A 74 515 bekannt. Als Salze und Komplexe der Verbindungen der Formel (III) kommen vorzugsweise die Salze und Komplexe der Mono-, Di-, Tri- und Tetraanionen mit den Metallen Li, Cs, Mg, Cd, Co, Al, Cr, Sn, Pb, besonders bevorzugt Na, K, Ca, Sr, Ba, Zn, Fe, Ni, Cu, Mn, in Betracht. Besondere Bedeutungen kommen den Nickelsalzen, bzw. -komplexen und deren festen Lösungen, Interkalations- und Einschlußverbindungen zu. Besonders bevorzugt ist eine Einschlußverbindung, Interkalationsverbindung, feste Lösung eines Salzes oder eines Komplexes der Azobarbitursäure, besonders bevorzugt des Azobarbitursäure-Nickel-1:1-Komplexes.

Bei der eingeschlossenen Verbindung handelt es sich vorzugsweise um eine cyclische oder acyclische organische Verbindung, vorzugsweise um Carbonsäureoder Sulfonsäureamide, Harnstoff oder substituierte Harnstoffe sowie Heterocyclen, insbesondere 2,4,6-Triamino-1,3,5-triazin, Acetoguanamin und Benzoguanamin.

Besonders bevorzugte Pigmente der Formel (III) entsprechen den Formeln (VIII) und (IX) 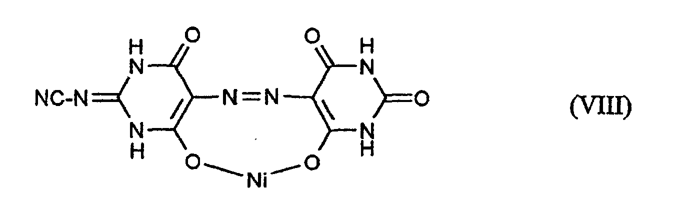 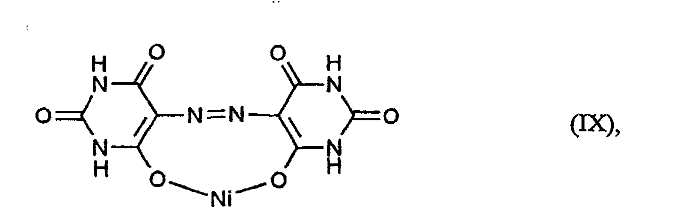 insbesondere in Form ihrer Einschlußverbindungen oder Interkalationsverbindung, wobei als eingeschlossene Verbindung 2,4,6-Triamino-1,3,5-triazin, Acetoguanamin oder Benzoguanamin bevorzugt ist.

Besonders bevorzugte Pigmente der Formeln (I) bis (III) oder diese enthaltende Mischungen sind solche, deren Drucke den Farbtonbereich abdecken, der im coloristischen Sinne vorzugsweise mit den Parametern des CIELAB-Systems (1976) bestimmten Buntton-Wertebereich H* von 80 bis 100°, vorzugsweise von 85 bis 100° beschrieben werden kann. (CIELAB-System (1976) = farbmetrisches Ordnungssystem, z.B. Brockes, A. et al., Farbmessung in der Textilindustrie, JSSN 0722-0391, 1986 Mitteilungen für die Farbstoffe verarbeitende Industrie, 24. Jahrgang)

Unter Dispergiermittel im Rahmen dieser Anmeldung wird eine die Pigmentteilchen in ihrer fein partikulären Form in wässrigen Medien stabilisierende Substanz verstanden. Unter fein partikulär wird vorzugsweise eine Feinverteilung von 0,001 bis 5 µm verstanden, vorzugsweise von 0,005 bis 1 µm, insbesondere von 0,005 bis 0,5 µm.

Geeignete Dispergiermittel sind beispielsweise anionisch, kationisch, amphoter oder nichtionogen.

Geeignete anionische Dispergiermittel sind insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit. Geeignet sind außerdem Dispergiermittel aus der Gruppe der Sulfobernsteinsäureester sowie Alkylbenzolsulfonate. Weiterhin kommen vor allem Ligninsulfonate in Betracht, z.B. solche, die nach dem Sulfit- oder Kraft-Verfahren gewonnen werden. Vorzugsweise handelt es sich um Produkte, die zum Teil hydrolysiert, oxidiert, propoxyliert, sulfoniert, sulfomethyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1 00 und 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

Als nichtionische Dispergiermittel kommen beispielsweise in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, wie Styrol-Phenol-Kondensate, Carbonsäureamiden und Harzsäuren. Hierbei handelt es sich z.B. um Ethylenoxidaddukte aus der Klasse der Umsetzungsprodukte von Ethylenoxid mit:
a) gesättigten und/oder ungesättigten Fettalkoholen mit 6 bis 20 C-Atomen oder
b) Alkylphenolen mit 4 bis 12 C-Atomen im Alkylrest oder
c) gesättigten und/oder ungesättigten Fettaminen mit 14 bis 20 C-Atomen oder
d) gesättigten und/oder ungesättigten Fettsäuren mit 14 bis 20 C-Atomen oder
e) hydrierte und/oder unhydrierte Harzsäuren.

Als Ethylenoxid-Addukte kommen insbesondere die unter a) bis e) genannten alkylierbaren Verbindungen mit 5 bis 120, insbesondere 5 bis 100, vorzugsweise 5 bis 100, insbesondere 5 bis 60, besonders bevorzugt 5 bis 30 Mol Ethylenoxid in Frage.

Als Dispergiermittel eignen sich ebenfalls die aus der prioritätsälteren, aber nicht vorveröffentlichten DE-A 19 535 246 teilweise bekannten Mischungen aus Alkoxylierungsprodukten von mindestens einem Styrol-Phenol-Kondensat der Formel (X) 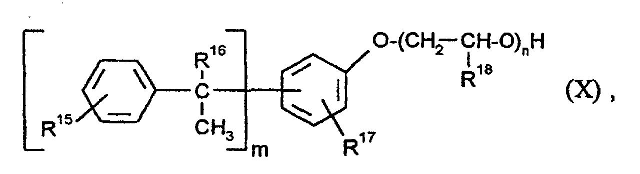 in der
- R¹⁵: Wasserstoff oder C₁-C₄-Alkyl bedeutet,
- R¹⁶: für Wasserstoff oder CH₃ steht,
- R¹⁷: Wasserstoff, C₁-C₄-Alkyl, C₁-C₄-Alkoxy, C₁-C₄-Alkoxycarbonyl oder Phenyl bedeutet,
- m: eine Zahl von 1 bis 4 bedeutet,
- n: eine Zahl von 6 bis 120 bedeutet,
- R¹⁸: für jede durch n indizierte Einheit gleich oder verschieden ist und für Wasserstoff, CH₃ oder Phenyl steht, wobei im Falle der Mitanwesenheit von CH₃ in den verschiedenen -(-CH₂-CH(R¹⁸)-O-)Gruppen in 0 bis 60 % des Gesamtwertes von n R¹⁸ für CH₃ und in 100 bis 40 % des Gesamtwertes von n R¹⁸ für Wasserstoff steht und wobei im Falle der Mitanwesenheit von Phenyl in den verschiedenen -(-CH₂-CH(R¹⁸)-O-)-Gruppen in 0 bis 40 % des Gesamtwertes von n R¹⁸ für Phenyl und in 100 bis 60 % des Gesamtwertes von n R¹⁸ für Wasserstoff steht,
und Estern der Alkoxylierungsprodukte (X) der Formel (XI) 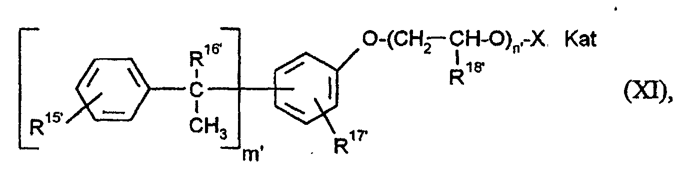 in der
- R^{15'}, R^{16'}, R^{17'}, R^{18'}, m' und n': den Bedeutungsumfang von R¹⁵, R¹⁶, R¹⁷, R¹⁸, m bzw. n, jedoch unabhängig hiervon, annnehmen,
- X: die Gruppe -SO₃^{⊖}, -SO₂^{⊖}, -PO₃^{⊖⊖} oder -CO-(R¹⁹)-COO^{⊖} bedeutet,
- Kat: ein Kation aus der Gruppe von H^{⊕}, Li^{⊕}, Na^{⊕}, K^{⊕} , NH₄^{⊕} oder HO-CH₂CH₂-NH₃^{⊕} ist, wobei im Falle von X = -PO₃^{⊖⊖} zwei Kat vorliegen und
- R¹⁹: für einen zweiwertigen aliphatischen oder aromatischen Rest steht, vorzugsweise für C₁-C₄-Alkylen, insbesondere Ethylen, C₂-C₄- einfach ungesättigte Reste, insbesondere Acetylen oder gegebenenfalls substituiertes Phenylen, insbesondere ortho-Phenylen steht, wobei als mögliche Substituenten vorzugsweise C₁-C₄-Alkyl, C₁-C₄-Alkoxy, C₁-C₄-Alkoxycarbonyl oder Phenyl in Frage kommen.

Gemische der Formeln (X) und (XI) sind beispielsweise aus der nicht vorveröffentlichten DE-A-19 535 256 bekannt, die Bestandteil dieser Anmeldung sind.

Die Erfindung betrifft weiterhin die noch neuen Verbindungen der Formel (XI),
worin
- X: für einen Rest der Formel -CO-(R¹⁹)-COO^{⊖} steht und
- R^{15'}, R^{16'}, R^{17'}, R^{18'}, R¹⁹, Kat, m' und n': die oben angegebenen Bedeutungen besitzen.

Die Erfindung betrifft weiterhin ein Verfahren zur Herstellung der erfindungsgemäßen Verbindungen der Formel (XI), das dadurch gekennzeichnet ist, daß man die entsprechende Verbindung der Formel (X), worin R¹⁵, R¹⁶, R¹⁷, R¹⁸, n und m die gleiche Bedeutung haben wie die entsprechenden Reste R^{15'}, R^{16'}, R^{17'}, R^{18'}, m' und n', mit Dicarbonsäuren der Formel (XII)

HOOC-(R¹⁹)-COOH (XII)

oder deren Derivaten, insbesondere deren Anhydriden, worin
- R¹⁹: die oben genannte Bedeutung besitzt,
umsetzt.

Entsprechende Umsetzungen können beispielsweise analog dem in DE-A 19 535 256 offenbarten Verfahren, dessen Offenbarung hiermit ebenfalls als Gegenstand dieser Anmeldung anzusehen ist, hergestellt werden.

Die besonders bevorzugten Verbindungen der Formel (XI) können durch Umsetzung von Verbindungen der entsprechenden Formel (X) mit Bernsteinsäure-, Maleinsäure- oder Phthalsäureanhydrid erhalten werden.

Die Erfindung betrifft weiterhin Mischungen enthaltend mindestens eine Verbindung der Formel (XI), worin X einen Rest der Formel -CO-(R¹⁹)-COO^{⊖} bedeutet und R¹⁹ die oben angegebene Bedeutung besitzt, und mindestens eine Verbindung der Formel (X).

Vorzugsweise enthalten diese erfindungsgemäßen Mischungen 5 bis 99 Gew.-% der Verbindung (XI) und 1 bis 95 Gew.-% der Verbindung (X).

Die Erfindung betrifft weiterhin die gegenüber DE-A 19 535 246 noch neuen Tensidgemische, enthaltend eine Verbindung der Formel (X) und eine Verbindung der Formel (XI), worin R¹⁵, R¹⁶, R¹⁷, R¹⁸, ^{15'}, R^{16'}, R^{17'} und R^{18'}, n, m, n' und m' die oben angegebene Bedeutung besitzen, X für -SO₃^{⊖}N, -SO₂^{⊖} oder -PO₃²⁻ steht, wobei solche Mischungen ausgenommen sind, worin n oder n' eine Zahl kleiner gleich 3 oder m oder m' eine Zahl von 6 bis 100 bedeutet.

Im übrigen sind die Verbindungen der Formel (XI) in der breitesten Bedeutung sowie ihre Mischungen mit den ihnen zugrundeliegenden Verbindungen der Formel (X) hervorragend als Dispergiermittel geeignet, auch andere als die hiergenannten Pigmente in Ink-Jet-Drucktinten zu stabilisieren. Als geeignete Pigmente sind in diesem Zusammenhang beispielsweise die folgenden zu nennen:

Ruße, insbesondere saure bis alkalische Ruße aus der Gruppe der Furnace- oder Gas-Ruße sowie chemisch oder physikalisch modifizierte oder nachbehandelte Ruße, anorganische Pigmente, wie beispielsweise Zinksulfide, Ultramarin, Eisenoxide, Kobaltblau sowie Chromoxidpigmente sowie Pigmente in Form fein partikulärer Oxide wie Siliziumdioxid, Titandioxid, Nickeloxide, Chromantimontitandioxide, Aluminiumoxid sowie fein partikuläre Metalle wie Kupfer, Eisen oder Aluminium und organische Farbpigmente wie beispielsweise solche der Azo-, Disazo-, Polyazo-, Anthrachinon-, Thioindigoreihe, ferner andere polycyclische Pigmente wie beispielsweise aus der Phthalocyanin-, Chinacridon-, Dioxazin-, Isoindolinon-, Naphthalintetracarbonsäure- und Perylen- und Perylentetracarbonsäurereihe, ferner solche aus der Perinon-, Indigoid-, Thioindigoid- und Diketopyrrolopyrrol-Reihe, sowie Metallkomplex-Pigmente von Azo-, Azomethin- oder Methinfarbstoffen oder verlackte Farbstoffe wie Ca-, Mg-, Al-Lacke von sulfonsäure- und/oder carbonsäuregruppenhaltigen Farbstoffen.

Als polymere Dispergiermittel kommen beispielsweise wasserlösliche sowie wasser-emulgierbare Typen in Frage, z.B. Homo- sowie Co-Polymerisate, wie statistische- oder Block-Copolymerisate.

Besonders bevorzugte Dispergiermittel sind polymere Dispergiermittel wie beispielsweise AB-, BAB- und ABC-Blockcopolymere. In den AB- oder BAB-Blockcopolymeren ist das A-Segment ein hydrophobes Homopolymer oder Copolymer, das eine Verbindung zum Pigment sicherstellt und der B-Block ein hydrophiles Homopolymer oder Copolymer oder ein Salz davon und stellt das Dispergieren des Pigmentes im wäßrigen Medium sicher. Derartige polymere Dispergiermittel und deren Synthese sind beispielsweise aus EP-A 518 225 sowie EP-A 556 649 bekannt.

Das eingesetzte Dispergiermittel wird vorzugsweise in einer Menge von 0,1 bis 100 Gew.-%, insbesondere 0,5 bis 60 Gew.-%, bezogen auf das eingesetzte Pigment, in der Pigmentpräparation verwendet.

In einer bevorzugten Ausführungsform enthält die erfindungsgemäß verwendete Pigmentpräparation
a) 10 bis 98 Gew.-%, insbesondere 30 bis 98 Gew.-% Wasser
b) 0,1 bis 100. Gew.-%, insbesondere 0,5 bis 60 Gew.-% Dispergiermittel, bezogen auf eingesetztes Pigment, und
c) 0,2 bis 60 Gew.-%, vorzugsweise 0,2 bis 20 Gew.-%, insbesondere 0,2 bis 20 Gew.-%, besonders bevorzugt 0,2 bis 10 Gew.-% mindestens eines Pigments der Formeln (I) bis (III).

Die erfindungsgemäß verwendeten Pigmentpräparationen können selbstverständlich neben den Komponenten a), b) und c) auch weitere Zusätze enthalten.

Als gegebenenfalls weitere Zusätze kommen für Drucktinten für den Ink-Jet Druck übliche Zusatzstoffe in Frage.

So können beispielsweise als weitere Komponente d) organische Lösungsmittel zugegen sein. Besonders geeignet sind in Wasser lösliche organische Lösungsmittel. Bevorzugt sind solche, die eine Löslichkeit von größer als 0,5 g/100 g Wasser aufweisen.

Als geeignete organische Lösungsmittel kommen beispielsweise in Frage:
aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole, wie Ethylenglykol, Propylenglykol, Butylenglykol, Diethylenglykol, Triethylenglykol, Trimethylolpropan, Polyethylenglykol mit einem mittleren Molgewicht von 100 bis 4000, vorzugsweise 400 bis 1500 g/mol oder Glycerin, Monohydroxyether, vorzugsweise Monohydroxyalkylether, besonders bevorzugt Mono-C₁-C₄-alkylglykolether wie Ethylenglykolmonoalkyl-, -monomethyl-, -diethylenglykolmonomethylether oder Diethylenglykolmonoethylether, Diethylenglykolmonobutylether, Dipropylenglykolmonoethylether, Thiodiglykol, Triethylenglykolmonomethylether oder -monoethylether, ferner 2-Pyrrolidon, N-Methyl-2-pyrrolidon, N-Ethyl-pyrrolidon, N-Vinyl-pyrrolidon, 1,3-Dimethyl-imidazolidon, Dimethylacetamid sowie Dimethylformamid.

Es kommen auch Gemische der erwähnten Lösungsmittel in Betracht.

Die Menge des organischen Lösungsmittels beträgt vorzugsweise 1 bis 40, insbesondere 2 bis 20 Gew.-%, bezogen auf die Pigmentpräparationen.

Bevorzugt beträgt die Menge an Wasser und organischem Lösungsmittel 20 bis 99 Gew.-%, vorzugsweise 30 bis 97 Gew.-%, bezogen auf die Pigmentpräparationen.

Weiterhin kann die Pigmentpräparation Mittel zur Einstellung der Viskosität der Tinte enthalten wie beispielsweise Polyvinylalkohol, Polyvinylpyrrolidon, Methylcellulose u.a. dem Fachmann bekannte Mittel, soweit sie die Stabilität der Drucktinte, das Druckverhalten und das Trocknungsverhalten auf Papier nicht negativ beeinflussen.

Zusätzlich zu den genannten Komponenten können die erfindungsgemäß als Drucktinten verwendeten Pigmentpräparationen noch einen Anteil von 0 bis 15 Gew.-%, vorzugsweise 0,5 bis 10 Gew.-%, bezogen auf Tinte, oberflächenaktives Mittel enthalten. Diese können grundsätzlich eingesetzt werden z.B. zur Regulierung der Oberflächenspannung der Tinte, ferner zur Verhinderung der Tropfenbildung oder des Auslaufens an der Düsenaustrittsfläche des Druckkopfes und zur Einstellung des Benetzungs- und Trocknungsverhaltens der Tinte auf unterschiedliche Substratarten (Papiere). Derartige oberflächenaktive Mittel sind dem Fachmann in Form von am Markt zugänglichen Produkten bekannt. Bei der Auswahl der oberflächenaktiven Mittel dürfen diese nicht die Stabilität der Pigmentpräparation oder die verwendeten Druckkopfmaterialien beeinträchtigen.

Außerdem können die erfindungsgemäß verwendeten Pigmentpräparation weitere ionogene als auch nicht-ionogene Hilfsmittel enthalten. Sofern das Dispergiermittel ionische Gruppen enthält, sollten diese Hilfsmittel vorzugsweise nicht-ionogen oder von gleicher Ionogenität sein.

Grundsätzlich können die Pigmentpräparationen noch Konservierungsmittel, Lichtschutzmittel, weitere Tenside und gegebenenfalls auch pH-Regler enthalten.

Beispiele für pH-Regler sind NaOH, Ammoniak oder Aminomethylpropanol, N,N-Dimethylaminoethanol.

Beispiele für Konservierungsmittel sind Methyl- und Chlormethyl-isothiazolin-3-on, Benzisothiazolin-3-on oder Mischungen davon.

Beispiele für Lichtschutzmittel sind UV-Absorber.

Die Erfindung betrifft weiterhin Pigmentpräparationen enthaltend
a) Wasser
b) Dispergiermittel
c) mindestens ein Pigment aus der Gruppe der durch Methin- oder Azogruppen-haltigen Reste substituierten Barbitursäure oder deren Derivate, wobei das Pigment gegebenenfalls in Form eines Salzes, Komplexes, als feste Lösung, als Einschlußverbindungen oder als Interkalationsverbindung vorliegt, vorzugsweise ein Pigment der Formeln (I) bis (III) und
d) mindestens ein organisches Lösungsmittel aus der Gruppe:
   aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole, wie Ethylenglykol, Propylenglykol, Butylenglykol, DiethylenGlykol, Triethylenglykol, Trimethylolpropan, Polyethylenglykol mit einem mittleren Molgewicht von 100 bis 4000, vorzugsweise 400 bis 1500 g/mol oder Glycerin, Monohydroxyether, vorzugsweise Monohydroxyalkylether, besonders bevorzugt Mono-C₁-C₄-alkylglykolether wie Ethylenglykolmonoalkyl-, -monomethyl-, -diethylenglykolmonomethylether oder Diethylenglykolmonoethylether, Diethylenglykolmonobutylether, Dipropylenglykolmonoethylether, Thiodiglykol, Triethylenglykolmonomethylether oder -monoethylether, ferner 2-Pyrrolidon, N-Methyl-2-pyrrolidon, N-Ethyl-pyrrolidon, N-Vinyl-pyrrolidon, 1,3-Dimethyl-imidazolidon, Dimethylacetamid sowie Dimethylformamid.

Die bevorzugten Ausführungsformen der einzelnen Komponenten entsprechen den oben angegebenen.

Die Erfindung betrifft weiterhin Pigmentpräparationen, enthaltend
a') Wasser,
b') eine Verbindung der Formel (XI), worin X für einen Rest der Formel -CO-(R¹⁹)-COO⊖ steht und die übrigen Reste die angegebenen Bedeutungen besitzen und
c') ein Pigment.

Bevorzugt sind dabei solche Präparationen, die gegebenenfalls die Verbindung der Formel (XI) in Mischung mit einer entsprechenden Verbindung der Formel (X) enthalten, wobei die bevorzugten Mengen denen der Komponente b) der obigen Pigmentpräparation entsprechen.

Die bevorzugten Angaben zu den Komponenten c') sowie gegebenenfalls ein organisches Lösungsmittel der Komponente d') entsprechen den Angaben zu den Komponenten c) und d) der oben beschriebenen Pigmentpräparaten.

Auch die Verwendung entspricht wie oben angegeben, vorzugsweise als Drucktinte für den Ink-Jet-Druck wie oben beschrieben.

Die Erfindung betrifft weiterhin die Herstellung der erfindungsgemäß verwendeten Pigmentpräparationen als Drucktinten für den Ink-Jet Druck, die dadurch gekennzeichnet ist, daß man mindestens ein Pigment der Formeln (I) bis (III) mit dem Dispergiermittel und gegebenenfalls weiteren Zusätzen homogenisiert und naßzerkleinert

Im allgemeinen wird das Pigment in Pulverform oder in Form des wasserfeuchten Preßkuchens zusammen mit einem Teil des Dispergiermittels und Wasser, vorzugsweise deionisiertem Wasser, zu einer homogenen Mahlsuspension beispielsweise mittels Rührwerksbütte, Dissolver und ähnlichen Aggregaten gegebenenfalls nach einer Vorzerkleinerung angeschlagen (d.h. eingebracht und homogenisiert).

Die Mahlsuspension kann außerdem Anteile niedrigsiedender Lösungsmittel (Siedepunkt <150°C) enthalten, die im Verlauf der anschließenden Feinmahlung durch Verdampfung ausgetragen werden können. Sie kann aber auch Anteile höhersiedender Lösungsmittel oder weiterer Zusätze, wie sie oben beschrieben sind z.B. Mahlhilfs-, Entschäumungs- oder Benetzungsmittel, enthalten.

Die Naßzerkleinerung umfaßt sowohl die Vorzerkleinerung als auch die Feinmahlung. Vorzugsweise liegt die Pigmentkonzentration der Suspension dabei oberhalb der gewünschten Konzentration der fertigen Pigmentpräparation bzw. Drucktinte. Die gewünschte Pigmentendkonzentration wird vorzugsweise erst im Anschluß an die Naßzerkleinerung eingestellt. Im Anschluß an die Vorzerkleinerung erfolgt eine Mahlung auf die gewünschte Partikelfeinverteilung von 0,001 bis 5 µm, vorzugsweise 0,005 bis 1 µm. Für diese Mahlung kommen Aggregate wie z.B. Kneter, Walzenstühle, Knetschnecken, Kugelmühlen, Rotor-Stator-Mühlen, Dissolver, Korundscheibenmühlen, Schwingmühlen und insbesondere schnelllaufende, kontinuierlich oder diskontinuierlich beschickte Rührwerkskugelmühlen mit Mahlkörpern mit einem Durchmesser von 0,1 bis 2 mm in Frage: Die Mahlkörper können dabei aus Glas, Keramik oder Metall, z.B. Stahl sein. Die Mahltemperatur liegt vorzugsweise im Bereich von 0 bis 250°C, in der Regel jedoch bei Raumtemperatur, insbesondere unterhalb des Trübungspunktes des eingesetzten Dispergiermittels der Komponente b) und des gegebenenfalls eingesetzten oberflächenaktiven Mittels.

In einer ebenfalls bevorzugten Verfahrensweise kann die Mahlung teilweise oder vollständig in einem Hochdruckhomogenisator oder in einem sogenannten Strahldispergator (bekannt aus der nicht vorveröffentlichten Anmeldung DE-A 19 536 845) erfolgen, wodurch der Gehalt an Mahlkörperabrieb in der Suspension bzw. die Abgabe von löslichen Stoffen aus den Mahlkörpern (z.B. Ionen aus Glaskörpern) auf ein Minimum reduziert bzw. vollständig vermieden werden kann.

In einem Verdünnungs-Schritt wird die erhaltene Pigmentpräparation in an sich bekannter Weise in Wasser gegebenenfalls mit den restlichen Dispergiermittelmengen und gegebenenfalls weiteren Zusätzen eingemischt und homogenisiert, sowie auf die gewünschte Pigmentendkonzentration bzw. Farbstärke der Präparation bzw. Drucktinte eingestellt. Hierbei kann gegebenenfalls noch ein Teil des Dispergiermittels zugesetzt werden, um beispielsweise eine Reagglomeration feiner Pigmentpartikel in der Verdünnung zu vermeiden.

Von besonderem Vorteil ist ein Verfahren zur Herstellung der Pigmentpräparationen, in dem im Mahlschritt zur Herstellung des Pigmentkonzentrates für die Stabilisierung ausreichend Dispergiermittel zur Verfügung gestellt wird. Im Anschluß daran oder nach Verdünnung mit Wasser wird in Lösung befindliches, nicht am Pigment adsorbiertes Dispergiermittel und/oder überschüssige oberflächenaktive Mittel vorzugsweise entfernt und anschließend die gewünschte Pigmentpräparation durch Zugabe der restlichen Anteile der Pigmentpräparation eingestellt.

Ein Verfahren zur Entfernung von in Lösung befindlichem Dispergiermittel ist beispielsweise die Zentrifugation der Suspension und anschließendes Abdekantieren des Überstandes.

Ferner können andere Additive wie z.B. Polyurethan- oder Acrylpolymere zugesetzt werden, um gegebenenfalls die Wasserechtheit weiter zu verbessern. Diese können sowohl wasser-löslicher als auch wasser-emulgierbarer Art sein, oder in einer der in d) enthaltenen Komponenten löslich sein.

In einer bevorzugten Verfahrensweise erfolgt die Mischung und Homogenisierung der Pigmentpräparationen unter Verwendung eines Strahldispergators oder Hochdruckhomogenisators, um die Entstehung von Schaum zu unterbinden und mögliche Reagglomeration zu vermeiden.

Mit der Einstellung der gewünschten Pigmentpräparationen erfolgt auch die Einstellung auf die gewünschte Viskosität, Farbstärke, Farbton, Dichte und Oberflächenspannung der Tinte.

Vor Gebrauch der Pigmentpräparationen als Drucktinten werden die Tinten gegebenenfalls fein-filtriert beispielsweise mittels 1 bis 5 µm Membran- oder Glasfiltern.

Im allgemeinen werden die physikalischen Tinteneigenschaften auf die Verwendung in üblichen Tintenstrahl-Druckern eingestellt, wobei die Oberflächenspannung zwischen 20 und 70 mN/m und die Viskosität kleiner als 20 mPa·s, vorzugsweise 0,5 bis 10 mPa·s betragen sollte.

Die erfindungsgemäß verwendeten sowie die erfindungsgemäßen Drucktinten liefern als Drucktinte im Ink-Jet-Druck verwendet Drucke mit ausgezeichneter Lichtechtheit und Brillanz und besitzen darüber hinaus folgende Vorteile: hervorragende Dispersions- und Lagerstabilität in einem weiten Temperaturbereich, keine sogenannte Kogation oder Clogging oder Verstopfung im Druckkopf, hohe Wasser- und Migrationsechtheit der Drucke auf unterschiedlichen Substraten, z.B. auf holzfreiem Papier, mittl. Papierqualität, geleimtem und beschichtetem Papier, polymeren Filmen, Transparentfolien für Overhead-Projektion, kein Ausbluten im Mehrfarbendruck, auch bei Verwendung zusammen mit Farbstoff-Tinten oder anderen pigmentierten Tinten.

Die oben beschriebenen Pigmentpräparationen werden als Drucktinten für den Ink-Jet-Druck verwendet.

Der Ink-Jet-Druck ist an sich bekannt und erfolgt im allgemeinen so, daß die Drucktinte in ein Aufnahmegefäß eines Tintenstrahl-Druckkopfes gefüllt wird und in kleinen Tröpfchen auf das Substrat gesprüht wird. Der Tintenausstoß in Tröpfchenform erfolgt dabei vorzugsweise über einen piezoelektrischen Kristall, eine beheizte Kanüle (Bubble- oder Thermo-Jet-Verfahren) oder mechanische Druckerhöhung, wobei Druck auf das Tintensystem ausgeübt wird und so Tintentropfen herausgeschleudert werden. Dabei werden die Tröpfchen aus einer oder mehreren kleinen Düsen gezielt auf das Substrat wie z.B. Papier, Holz, Textilien, Kunststoff oder Metall geschossen. Durch elektronische Aussteuerung werden die einzelnen Tröpfchen auf dem Substrat zu Schriftzeichen oder graphischen Mustern zusammengefaßt.

Möglich ist auch ein Verfahren, bei dem mittels elektrostatischer Ablenkung aus einem Tintenstrahl kleinste Volumina in Form von Tropfen auf ein Substrat gebracht werden.

### Beispiele

### Beispiel 1

### Herstellung einer besonders bevorzugten Einschlußverbindung des Pigmentes gemäß Formel (IX)

25 g Benzolsulfonsäurehydrazid, 200 ml Wasser, 20 ml 10 N Salzsäure und 1,25 g eines Kondensationsproduktes von Stearinsäure mit Taurin wurden 30 Minuten verrührt. Man fügte 60 g Eis hinzu und tropfte anschließend in ca. 30 Minuten 34 ml einer wäßrigen Natriumnitritlösung mit einem Gehalt von 30 g Natriumnitrit in 100 ml Lösung hinzu. Der Ansatz wurde 30 Minuten gerührt, wobei man einen Nitritüberschuß aufrechterhielt. Anschließend zerstörte man den Nitritüberschuß mit wenig Amidosulfonsäure und neutralisierte mit ca. 5 ml 10 N Natronlauge. Man erhielt eine Emulsion von Benzolsulfonsäureazid.

Zu der so hergestellten Emulsion gab man 38,2 g Barbitursäure, verrührte 10 Minuten und stellte dann mit ca. 33 ml 10 N Natronlauge auf pH 8. Der Ansatz wurde 2 Stunden bei 50°C gerührt, danach mit 3 ml Essigsäure und ca. 14 ml 10 N Salzsäure auf pH 4,8 gestellt und noch 1 Stunde auf 70°C und 3 Stunden auf 80°C erhitzt. Man erhielt eine Suspension des Natriumsalzes der Azobarbitursäure; zusätzlich waren noch ca. 22 g des als Nebenprodukt entstandenen Benzolsulfonamids gelöst vorhanden.

Eine so hergestellte Suspension wurde auf 95°C bis 100°C aufgeheizt, abgesaugt und mit ca. 1 l siedend heißem Wasser in mehreren Portionen gewaschen. Man erhielt einen Preßkuchen des Natriumsalzes der Azobarbitursäure.

Der so hergestellte Preßkuchen wurde mit 500 ml Wasser angerührt. Bei 80°C tropfte man in ca. 5 Minuten eine Lösung von 34,5 g NiCl₂-6H₂O und 13 g wasserfreiem Natriumacetat in 100 ml Wasser hinzu. Die Mischung wurde 1 Stunde gerührt bei 80°C, danach 42 g Melamin zugefügt und nochmals 1 Stunde bei 80°C und 2 Stunden bei 95°C gerührt, anschließend heiß abgesaugt und mit heißem Wasser gewaschen.

Man erhielt einen wasserfeuchten Pigment-Preßkuchen mit einem Trockengehalt von 42,6 Gew.-%.

### Beispiel 2 bis 4

### Herstellung von Pigmentpräparationen (Teile = Gewichtsteile, Prozente = Gewichtsprozente)

### Beispiel 2

Zu
- 89,9 Teilen: des feuchten Preßkuchen des Pigmentes gemäß Formel (IX) hergestellt nach Beispiel 1 mit einem Trockengehalt von 42,6 % wurden
- 6,9 Teile: eines Naphthalinsulfonsäurekondensationsproduktes (Tamol® NN 9401, BASF AG) sowie
- 3,2 Teile: deionisiertes Wasser zugesetzt und mittels eines Dissolvers homogenisiert. Der pH-Wert der Suspension betrug 5,5. Im Anschluß wurde die Suspension in eine offene diskontinuierlich betriebene 1 l-Rührwerkskugelmühle (Fabrikat Sussmeyer, Brüssel) eingebracht und mit Zirkoniumoxid-Perlen (Durchmesser 0,4 bis 0,6 mm) unter Kühlung über eine Dauer von 3 Stunden gemahlen. Das erhaltene wässrige Pigmentkonzentrat wurde mit
- 0,1 Teilen: eines Konservierungsmittels (Benzisothiazolin-3-on) sowie deionisiertem Wasser auf eine Pigmentkonzentration von 35 % eingestellt.

Die Pigmentpräparation besitzt eine ausgezeichnete Fließfähigkeit und eine einwandfreie Suspensionsstabilität bei Lagerung über 3 Monate bei Raumtemperatur und 50°C. Wässrige Verdünnungen dieser Präparation bis zu einer Pigmentkonzentration von 2 % sind ebenso stabil. Die Zusammensetzung kann Tabelle 1 entnommen werden.

### Beispiel 3

- 22 Teile: des getrockneten Pigmentes gemäß Formel (V) (R⁹ = CONHCH₃, R¹² = H), hergestellt gemäß Beispiel 10, von US 5 177 209, und
- 8,8 Teile: eines Ligninsulfonats (Ultrazine® NA, Fa. Lignotech, Düsseldorf) wurden in
- 69,2 Teilen: deionisiertem Wasser mittels eines Dissolvers angeschlagen und homogenisiert. Im Anschluß erfolgte eine Mahlung wie in Beispiel 2 beschrieben. Das so erhaltene Pigmentkonzentrat wurde mit
- 0,1 Teilen: des gleichen Konservierungsmittels wie in Beispiel 2 und deionisiertem Wasser auf eine Pigmentkonzentration von 20 %, und der pH-Wert mittels verdünnter Schwefelsäure auf 8 eingestellt. Die Präparation besitzt ebenfalls ausgezeichnete Stabilitäts- und Fließeigenschaften. Die Zusammensetzung kann Tabelle 1 entnommen werden.

### Beispiel 4

Zu
- 90,9 Teilen: des feuchten Preßkuchens des Pigmentes gemäß Formel (IV) (R¹¹ = H), hergestellt nach Beispiel 8, DE 3 935 858 A1, mit einem Trockengehalt von 40,4 % wurden
- 1,8 Teile: eines Dispergiermittelgemisches aus Alkoxylierungsprodukten gemäß Formel (X) und (XI) mit einer Zusammensetzung von
51 % gemäß Formel X und
R¹⁵ = CH₃, R^{16,17,18} = H
m = 2,8
n = 50
und
49 % gemäß Formel (XI) und
R^{15'} = CH₃, R^{16',17',18'} = H
m' = 2,8
n' = 50
X = SO₃⁻
Kat = NH₄⁺
sowie
- 7,3 Teilen: deionisiertem Wasser zugesetzt und mittels eines Dissolvers homogenisiert. Der pH-Wert wurde mittels verdünnter Natronlauge auf 7,0 gestellt. Im Anschluß wurde die Suspension wie in Beispiel 2 beschrieben gemahlen und das so erhaltene Pigmentkonzentrat mit
- 0,1 Teilen: des gleichen Konservierungsmittels wie in Beispiel 2 und deionisiertem Wasser auf eine Pigmentkonzentration von 30 % eingestellt. Die Zusammensetzung kann Tabelle 1 entnommen werden.

**Tabelle 1**

| (Angaben in Gew.-%, bezogen auf das Pigmentkonzentrat) | | | | |
|---|---|---|---|---|
| | Beispiel | 2 | 3 | 4 |
| | Deionisiertes Wasser | 58,6 | 71,9 | 68,43 |
| Dispergiermittel | Ultrazine® NA | - | 8,0 | - |
| | Tamol® NN 9401 | 6,3 | - | - |
| | Dispergiermittelgemisch | - | - | 1,47 |
| Pigmente | Pigment gem. Formel (IX) (trocken) | 35 | - | - |
| | | | | |
| | Pigment gem. Formel (V) (trocken) | - | 20 | - |
| | | | | |
| | Pigment gem. Formel (IV) (trocken) | - | - | 30 |
| weitere Zusätze | Konservierungsmittel | 0,1 | 0,1 | 0,1 |
| Eigenschaften | pH-Wert | 6,5 | 8,0 | 6,9 |
| | | | | |
| | max. Teilchengröße* (µm) | <0,2 | <0,2 | <0,2 |

| | | | | |
|---|---|---|---|---|
| *) Bestimmt aus der Partikelgrößenverteilung (Gewichtsmittel) Meßapparatur: Scheibenzentrifuge Typ DCP® 1000 der Fa. Brookhaven | | | | |

### Anwendungsbeispiele

### Beispiele 5 bis 7

Die Pigmentpräparationen gemäß den Beispielen 2 bis 4 wurden zur Verwendung als Drucktinten für den Ink-Jet-Druck auf eine Pigmentkonzentration von jeweils 4 Gew.-% unter Einsatz von deionisiertem Wasser sowie mit organischen Lösungsmitteln eingestellt. Die Zusammensetzungen der als Drucktinten zu verwendenden Pigmentpräparationen wurden jeweils so gewählt, daß die Viskosität der Drucktinten in einem Bereich von 3 bis 5 mPas lag.

Die Herstellung erfolgte ausgehend von den Pigmentpräparationen der Beispiele 2 bis 4 durch Mischen und Rühren mit der erforderlichen Menge an Wasser sowie sonstigen Zusätzen wie organischen Lösungsmittel in einem Glasbehälter. Im Anschluß erfolgte eine Ultraschallbehandlung über 1 Minute und die Zugabe von Konservierungsmittel und gegebenenfalls pH-Einstellung mittels verdünnter NaOH. Die Zusammensetzung der als Drucktinten verwendeten Pigmentpräparationen geht aus Tabelle 2 hervor.

Diese Pigmentpräparationen wurden vor dem Drucken durch ein 1,2 µm Filter filtriert, um gegebenenfalls vorhandenen Mahlgutabrieb und Grobanteil aus der Suspension zu entfernen.

**Tabelle 2**

| Zusammensetzung und Eigenschaften der als Drucktinten verwendeten Präparationen (Angaben in Gew.-%, bezogen auf Präparation) | | | | |
|---|---|---|---|---|
| Beispiel | | 5 | 6 | 7 |
| Deionisiertes Wasser | % | 79,0 | 70,4 | 77,1 |
| Polyethylenglykol (Mol.Gew. 400 g/mol) | % | 4,0 | 4,0 | 4,0 |
| 2-Pyrrolidon | % | 3,9 | 3,9 | 3,9 |
| Isopropanol | % | 1,5 | 1,5 | 1,5 |
| Pigmentkonzentrat | | | | |
| gemäß Bsp. 2 | % | 11,4 | | |
| gemäß Bsp. 3 | % | | 20 | |
| gemäß Bsp. 4 | % | | | 13,3 |
| Konservierungsmittel | % | 0,2 | 0,2 | 0,2 |
| pH-Wert | - | 6,7 | 8,0 | 7,5 |
| Oberflächenspannung | mN/m | >30 | >30 | >30 |
| max. Teilchengröße (Scheibenzentrifuge) | µm | <0,2 | <0,2 | <0,2 |

### Eigenschaften der als Drucktinfen verwendeten Pigmentpräparationen gemäß den Beispielen 5 bis 7

Es wurden Drucke auf einem handelsüblichen Tintenstrahldrucker der Fa. Hewlett Packard (HP Deskjet® 1600 C) unter Verwendung einer gereinigten Kartusche erstellt.

Die Drucktinten ließen sich einwandfrei drucken und ergaben brillante Druckbilder mit hoher Farbstärke und gutem Kontrast.

Die Lichtechtheitsprüfung der Drucke auf unterschiedlichen Substraten wurde mit dem Xenon Test 450® (Gerät der Fa. Heraeus) durchgeführt und ergab - bewertet mit dem gleichermaßen belichteten Blaumaßstab (DIN 54004) die in Tabelle 3. dargestellten Ergebnisse:

**Tabelle 3**

| | Lichtechtheitsnote auf Substrat | | | |
|---|---|---|---|---|
| Drucktinte gemäß | Normalpapier AGFA® 701 | Glossy Paper (HP-C 3831A®) | Beschichtete Folie HP-C 3828A/32-A®) | HP Spezialpapier (HP-516342®) |
| Beispiel 5 | 7 - 8 | 6 - 7 | 7 | 7 - 8 |
| Beispiel 6 | 6 - 7 | 6 | nicht geprüft | nicht geprüft |
| Beispiel 7 | 7 - 8 | 7 - 8 | 6 - 7 | 7 |
| Anm: 8 Δ kein Farbverlust 1 Δ vollständiger Farbverlust | | | | |

Die Drucke zeigten darüberhinaus eine gute Wasser- und Textmarkerechtheit.

### Beispiel 8

### Herstellung eines Dispergiermittels gemäß Formel (XI)

In einer mit Stickstoff gespülten 2 l Rührwerksapparatur wurden
- (0,9 mol) 1500 g: Tristyrylphenyloxyethylat-Emulgator der Formel (X) 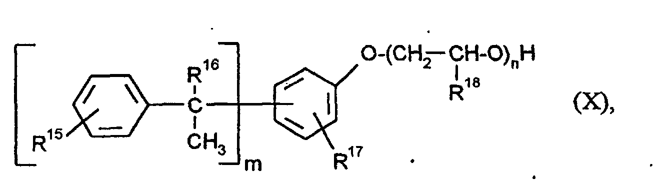 worin
m: 2,7
n: 29
R₂: H
R₁₅: H und
R₁₇: H bedeutet,
R₁₈: H
mit einer statistischen Kettenlänge von ca. 29 EO-Einheiten (aufgeschmolzen bei 90°C) vorgelegt und bei 90 bis 100°C mit
(0,9 mol) 90,1 g Bernsteinsäureanhydrid versetzt.
Man rührte unter schwachem Stickstoffstrom 2 Stunden bei 100°C, anschließend 3 Stunden bei 150°C nach, wobei die anfangs cremige weiße Masse dünnflüssiger und schwach bräunlich wurde.
Man kühlte auf 100°C ab und filtrierte über eine G-2 Glasfritte. Es wurden 1.480 g einer viskosen, leicht trüben bräunlichen Flüssigkeit mit folgenden Eigenschaften gewonnen:
pH-Wert 1%ig in vollentsalztem Wasser = 4,6
Trübungspunkt 1%ig in vollents. Wasser = 94-96°C
Erstarrungspunkt = ca. 25°C
Säurezahl = 29,5mg KOH/g

Die so erhaltene Mischung besitzt mehr als 90 % des Dicarbonsäurehalbesters gemäß Formel (XI):

### Beispiel 9

4,3 Teile des in Beispiel 8 beschriebenen Dispergiermittelgemisches wurden bei 80°C aufgeschmolzen und zu
7,9 Teilen deionisiertem Wasser hinzugegeben und vollständig gelöst. Die Lösung wurde in
87,8 Teilen des wasserfeuchten Preßkuchens von Color Index Pigment Rot 122 mit einem Trockengehalt von 31,9 % eingetragen und anschließend die Mischung mittels eines Dissolvers vorzerkleinert und homogenisiert. Hierbei wurde der pH-Wert der Suspension mittels verdünnter Natronlauge auf 8,0 eingestellt. Im Anschluß erfolgte eine Mahlung wie in Beispiel 2 beschrieben. Die erhaltene wäßrige Pigmentpräparation wurde mit
0,1 Teilen eines Konservierungsmittels (Benzisothiazolin-3-on) sowie deionisiertem Wasser auf eine Pigmentkonzentration von 25 % eingestellt.
Diese Präparation besitzt eine sehr gute Fließfähigkeit und einwandfreie Suspensionsstabilität bei Lagerung über 3 Monate sowohl bei Raumtemperatur als auch bei 50°C.
Die so erhaltene Präparation wurde zur Verwendung als Drucktinte für den Ink-Jet-Druck auf eine Pigmentkonzentration von 4 % verdünnt. Die Zusammensetzung und Eigenschaften der Drucktinte wurde dabei wie folgt gewählt:

| | |
|---|---|
| Deionisiertes Wasser | 69 % |
| Polyethylenglykol (MW: 800 g/mol) | 10 % |
| o. beschr. 25%ige Pigmentpräparation | 16 % |
| 2-Pyrrolidon | 5 % |
| pH-Wert | 7,2 |
| Oberflächenspannung | > 30 mN/m |
| max. Teilchengröße (Scheibenzentrifuge) | < 0,2 µm |

Die Drucktinte ließ sich auf einem handelsüblichen Tintenstrahldrucker (analog Beispiel 5 bis 7) einwandfrei verdrucken und ergab Druckbilder mit hoher Farbstärke und hoher Brillanz, sowie guter Wasser- und Textmarkerechtheit.

## Patentansprüche

1. Verwendung von Pigmentpräparationen als Drucktinten für den Ink-Jet Druck, enthaltend
a) Wasser
b) Dispergiermittel und
c) mindestens ein Pigment aus der Gruppe der durch Methin- oder Azogruppen-haltigen Reste substituierter Barbitursäure oder deren Derivate, wobei das Pigment gegebenenfalls in Form eines Salzes, Komplexes, als feste Lösung, als Einschlussverbindung oder als Interkalationsverbindung vorliegt

2. Verwendung gemäß Anspruch 1, **dadurch gekennzeichnet, dass** als Komponente
c) mindestens ein Pigment der Formeln (I) bis (III) oder deren tautomeren Formen 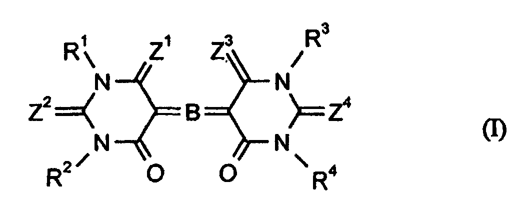 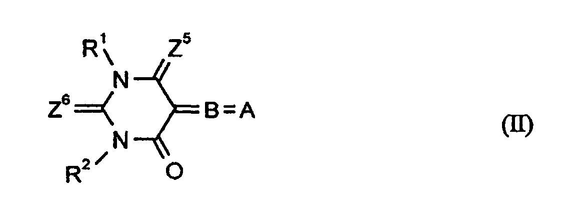 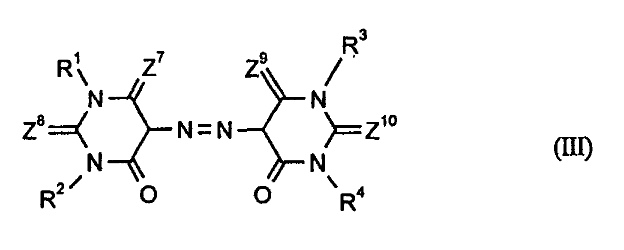 eingesetzt wird, worin
R¹, R², R³ und R⁴ unabhängig voneinander für Wasserstoff, Alkyl, insbesondere C₁-C₆-Alkyl, Cycloalkyl, insbesondere C₅-C₈-Cycloalkyl, Aryl, insbesondere gegebenenfalls substituiertes Phenyl, Aralkyl oder Hetaryl, stehen,
B den Rest eines Isoindolins der Formel 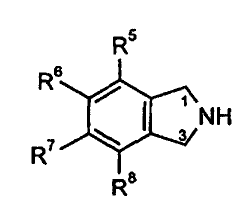 bedeutet, wobei die Verknüpfung mit den beiden Doppelbindungen in der 1- und 3-Position des Isoindolins erfolgt, und
R⁵, R⁶, R⁷ und R⁸ unabhängig voneinander für Wasserstoff, Halogen, insbesondere F, Cl und Br, C₁-C₆-Alkyl, C₁-C ₆-Alkoxy oder C₆-C₁₀-Aryloxy stehen,
A den Rest eines Cyanmethylens der Formel 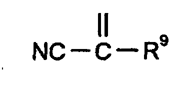 bedeutet, worin
R⁹ für einen elektronenanziehenden Rest steht und
Z¹ bis Z¹⁰ unabhängig voneinander für O oder NR¹⁰ stehen,
worin
R¹⁰ für Wasserstoff oder Cyan steht.

3. Verwendung gemäß Anspruch 1, **dadurch gekennzeichnet, dass** Pigmente der Formel (I) der Formel (IV) entsprechen 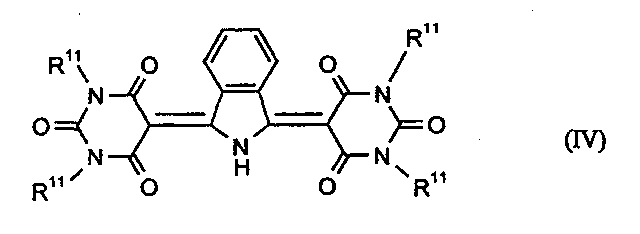 worin
R¹¹ Wasserstoff, C₁-C₆-Alkyl oder Phenyl bedeutet.

4. Verwendung gemäß Anspruch 1, **dadurch gekennzeichnet, dass** die Pigmentpräparation ein Pigment der Formel 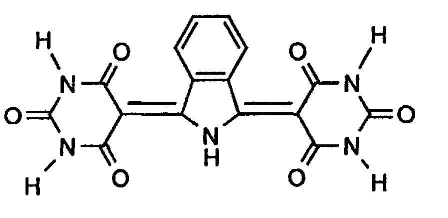 enthält.

5. Verwendung gemäß Anspruch 1, **dadurch gekennzeichnet, dass** Pigmente de Formel (II) der Formel (V) entsprechen 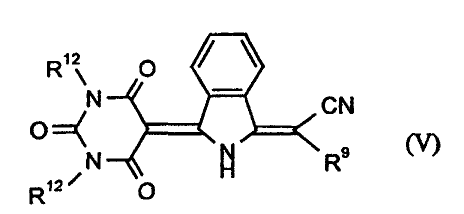 worin
R⁹ CN, gegebenenfalls durch C₁-C₆-Alkyl, C₅-C₇-Cycloalkyl, Aralkyl, insbesondere C₆-C₁₀-Aryl-C₁-C₄-alkyl, oder C₆-C₁₀-Aryl substituiertes Aminocarbonyl, insbesondere CONHCH₃, C₁-C₆-Alkoxycarbonyl, C ₆-C₁₀-Aryloxycarbonyl oder Hetaryl, insbesondere einen Rest der Formel (VI) oder (VII) bedeutet 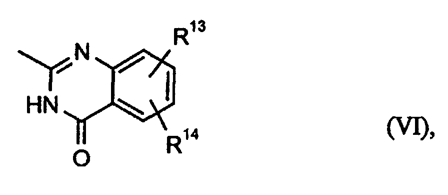 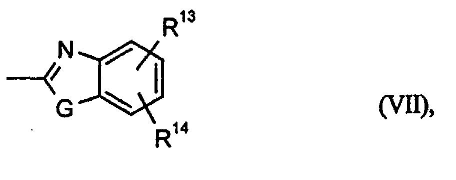 worin
R¹³ und R¹⁴ unabhängig voneinander Wasserstoff, Halogen, insbesondere Cl, Br und F, C₁-C₆-Alkyl, C₁-C₆-Alkoxy oder C₁-C₆-Alkoxycarbonyl bedeuten oder
R¹³ und R¹⁴ zusammen den Rest eines ankondensierten Benzolringes bedeuten
G für O, S, NH oder N(C₁-C₄-Alkyl) steht,
und
R¹² Wasserstoff, C₁-C₆-Alkyl oder Phenyl bedeutet.

6. Verwendung gemäß Anspruch 1, **dadurch gekennzeichnet, dass** das Pigment der Formel (I) der Formel 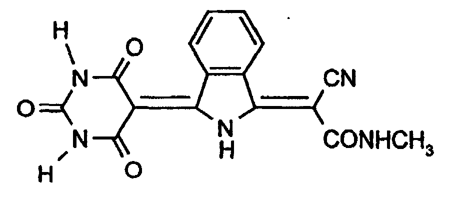 entspricht.

7. Verwendung gemäß Anspruch 1, **dadurch gekennzeichnet, dass** Pigmente der Formel (III) der Formel (VIII) oder (IX) entsprechen

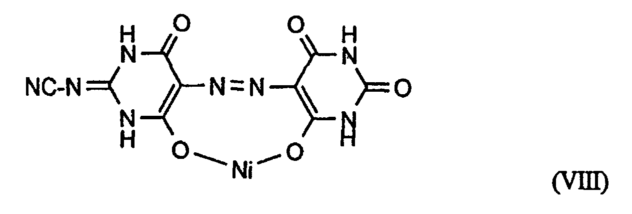

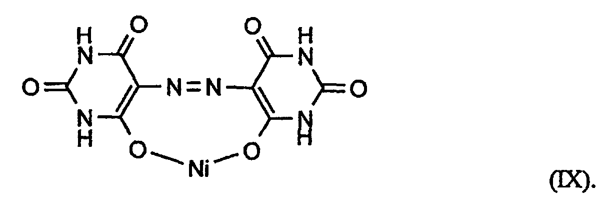

8. Verwendung gemäß Anspruch 1, **dadurch gekennzeichnet, dass** das Pigment der Formel (III) in Form eines Salzes, Komplexes, als feste Lösung, als Einschlussverbindung oder als Interkalationsverbindung vorliegt.

9. Verwendung gemäß Anspruch 8, **dadurch gekennzeichnet, dass** das Pigment der Formel (III) in Form einer Einschlussverbindung oder Interkalationsverbindung vorliegt, wobei die eingeschlossene Verbindung eine cyclische oder acyclische Verbindung, vorzugsweise Carbonsäure- oder Sulfonsäureamide, Harnstoff oder substituierte Harnstoffe sowie Heterocyclen, insbesondere 2,4,6-Triamino-1,3,5-triazin, Acetoguanamin und Benzoguanamin ist.

10. Pigmentpräparationen enthaltend
a) Wasser
b) Dispergiermittel
c) mindestens ein Pigment der Formeln (I) bis (III) oder deren tautomeren Formen 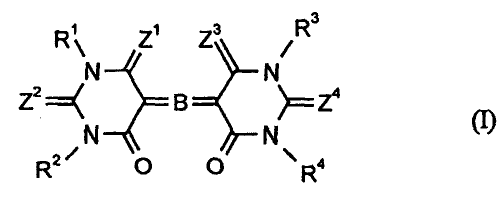 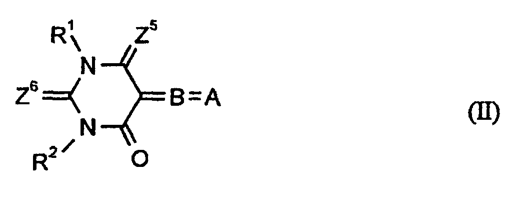 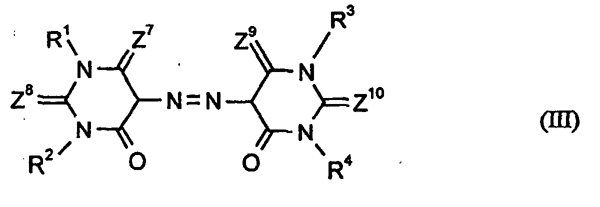 worin
R¹, R², R³ und R⁴ unabhängig voneinander für Wasserstoff, Alkyl, insbesondere C₁-C₆-Alkyl, Cycloalkyl, insbesondere C₅-C₈-Cycloalkyl, Aryl, insbesondere gegebenenfalls substituiertes Phenyl, Aralkyl oder Hetaryl,
stehen,
B den Rest eines Isoindolins der Formel 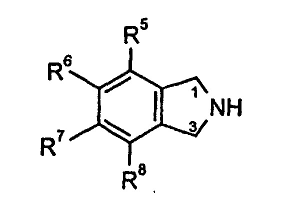 bedeutet, wobei die Verknüpfung mit den beiden Doppelbindungen in der 1- und 3-Position des Isoindolins erfolgt, und
R⁵, R⁶, R⁷ und R8 unabhängig voneinander für Wasserstoff, Halogen, insbesondere F, Cl und Br, C₁-C₆-Alkyl, C₁-C ₆-Alkoxy oder C₆-C₁₀-Aryloxy stehen,
A den Rest eines Cyanmethylens der Formel 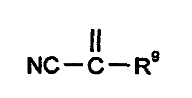 bedeutet, worin
R⁹ für eine elektronenanziehenden Rest steht und
Z¹ bis Z¹⁰ unabhängig voneinander für O oder NR¹⁰ stehen,
worin
R¹⁰ für Wasserstoff oder Cyan steht,
und
d) mindestens ein organisches Lösungsmittel aus der Gruppe:
aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole, wie Ethylenglykol, Propylenglykol, Butylenglykol, Diethylenglykol, Triethylenglykol, Trimethylolpropan, Polyethylenglykol mit einem mittleren Molgewicht von 100 bis 4000, vorzugsweise 400 bis 1500 g/mol oder Glycerin, Monohydroxyether, vorzugsweise Monohydroxyalkylether, besonders bevorzugt Mono-C₁-C₄alkylglykolether wie Ethylenglykolmonoalkyl-, -monomethyl-, -diethylenglykolmonomethylether oder Diethylenglykolmonoethylether, Diethylenglykolmonobutylether, Dipropylenglykolmonoethylether, Thiodiglykol, Triethylenglykolmonomethylether oder -monoethylether, ferner 2-Pyrrolidon, N-Methyl-2-pyrrolidon, N-Ethyl-pyrrolidon, N-Vinyl-pyrrolidon, 1,3-Dimethyl-imidazolidon, Dimethylacetamid sowie Dimethylformamid.

11. Pigmentpräparationen gemäß Anspruch 10, **dadurch gekennzeichnet, dass** das Pigment der Formel (III) in Form eines Salzes, Komplexes, als feste Lösung, als Einschlussverbindung oder als Interkalationsverbindung vorliegt.

12. Pigmentpräparationen gemäß Anspruch 10, **dadurch gekennzeichnet, dass** das Pigment der Formel (III) in Form einer Einschlussverbindung oder Interkalationsverbindung vorliegt, wobei die eingeschlossene Verbindung eine cyclische oder acyclische Verbindung, vorzugsweise Carbonsäure- oder Sulfonsäureamide, Harnstoff oder substituierte Harnstoffe sowie Heterocyclen, insbesondere 2,4,6-Triamino-1,3,5-triazin, Acetoguanamin und Benzoguanamin ist.

## Claims

1. Use of pigment preparations as printing inks for ink-jet printing, comprising
a) water
b) a dispersing agent and
c) at least one pigment from the group consisting of barbituric acid substituted by radicals containing methine or azo groups, or derivatives thereof, the pigment optionally being present in the form of a salt or complex, as a solid solution, as an inclusion compound or as an intercalation compound.

2. Use according to Claim 1, **characterized in that** as component
c) at least one pigment of the formulae (I) to (III) or tautomeric forms thereof 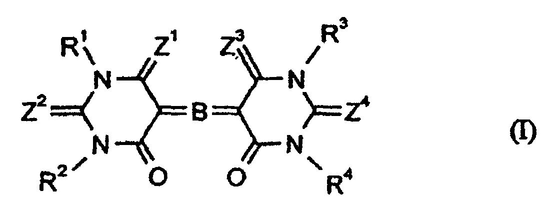 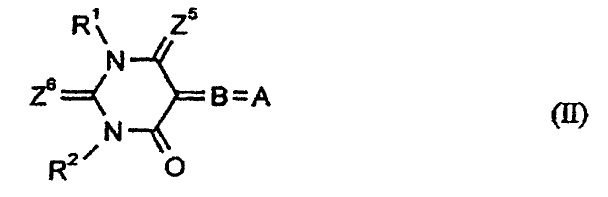 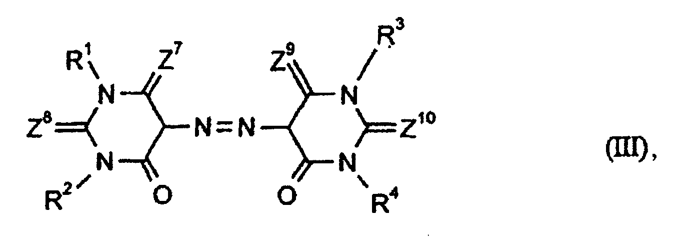 is used, wherein
R¹, R², R³ and R⁴ independently of one another represent hydrogen, alkyl, in particular C₁-C₆-alkyl, cycloalkyl, in particular C₅-C₈-cycloalkyl, aryl, in particular optionally substituted phenyl, aralkyl or hetaryl,
B denotes the radical of an isoindoline of the formula 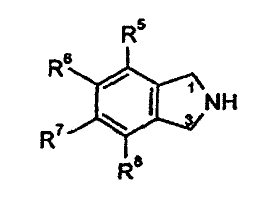 wherein the linkage with the two double bonds is in the 1-and 3-position of the isoindoline, and
R⁵, R⁶, R⁷ and R⁸ independently of one another represent hydrogen, halogen, in particular F, Cl and Br, C₁-C₆-alkyl, C₁-C₆-alkoxy or C₆-C₁₀-aryloxy,
A denotes the radical of a cyanomethylene of the formula 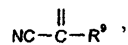 wherein
R⁹ represents an electron-withdrawing radical, and
Z¹ to Z¹⁰ independently of one another represent O or NR¹⁰,
wherein
R¹⁰ represents hydrogen or cyano.

3. Use according to Claim 1, **characterized in that** the pigments of the formula (I) correspond to the formula (IV) 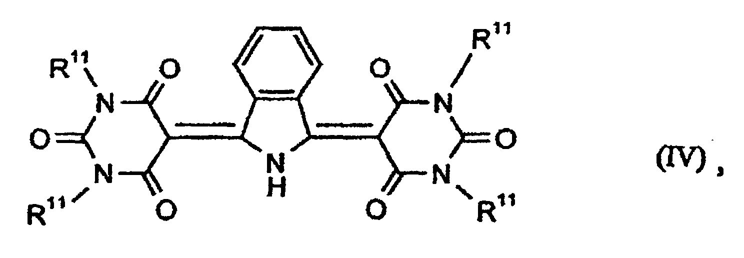 wherein
R¹¹ denotes hydrogen, C₁-C₆-alkyl or phenyl.

4. Use according to Claim 1, **characterized in that** the pigment preparation comprises a pigment of the formula

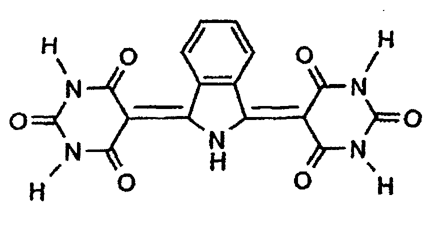

5. Use according to Claim 1, **characterized in that** pigments of the formula (II) correspond to formula (V) 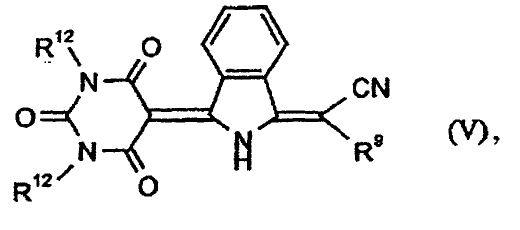 wherein
R⁹ denotes CN, aminocarbonyl which is optionally substituted by C₁-C₆-alkyl, C₅-C₇-cycloalkyl, aralkyl, in particular C₆-C₁₀-aryl-C₁-C₄-alkyl or C₆-C₁₀-aryl, in particular CONHCH₃, C₁-C₆-alkoxycarbonyl, C₆-C₁₀-aryloxycarbonyl or hetaryl, in particular a radical of the formula (VI) or (VII) 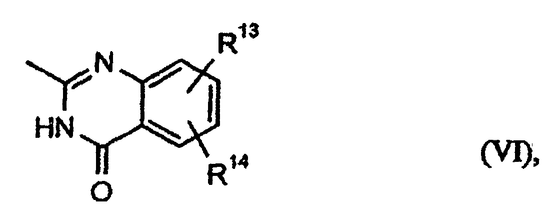 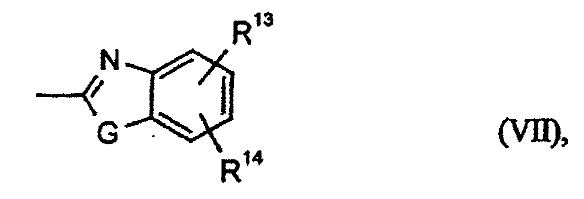 wherein
R¹³ and R¹⁴ independently of one another denote hydrogen, halogen, in particular Cl, Br and F, C₁-C₆-alkyl, C₁-C₆-alkoxy or C₁-C₆-alkoxycarbonyl, or
R¹³ and R¹⁴ together denote the radical of a fused-on benzene ring,
G represents O, S, NH or N(C₁-C₄-alkyl)
and
R¹² denotes hydrogen, C₁-C₆-alkyl or phenyl.

6. Use according to Claim 1, **characterized in that** the pigment of the formula (I) corresponds to the formula

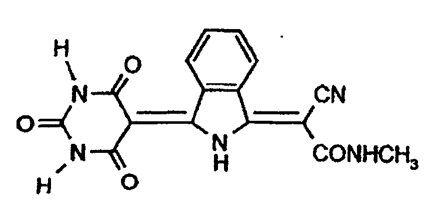

7. Use according to Claim 1, **characterized in that** pigments of the formula (III) correspond to the formula (VIII) or (IX)

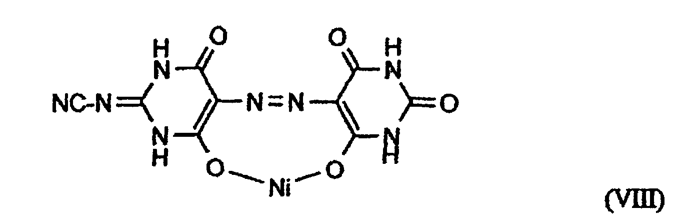

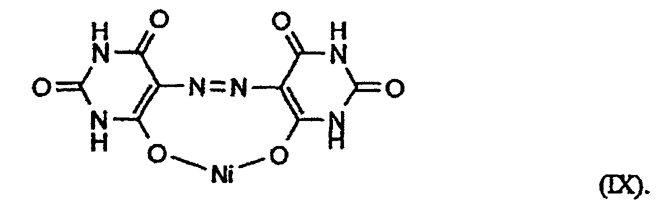

8. Use according to Claim 1, **characterized in that** the pigment of the formula (III) is present in the form of a salt or complex, as a solid solution, as an inclusion compound or as an intercalation compound.

9. Use according to Claim 8, **characterized in that** the pigment of the formula (III) is present in the form of an inclusion compound or intercalation compound, the included compound being a cyclic or acyclic compound, preferably carboxamides or sulphonamides, urea or substituted ureas, and heterocyclic compounds, in particular 2,4,6-triamino-1,3,5-triazine, acetoguanamine and benzoguanamine.

10. Pigment preparations comprising
a) water
b) a dispersing agent
c) at least one pigment of the formulae (I) to (III) or tautomeric forms thereof 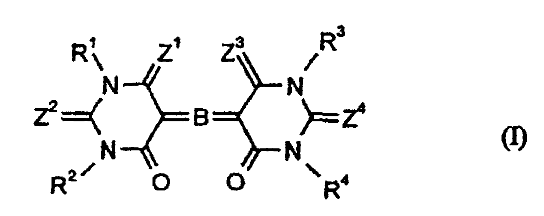 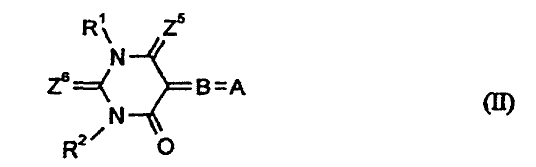 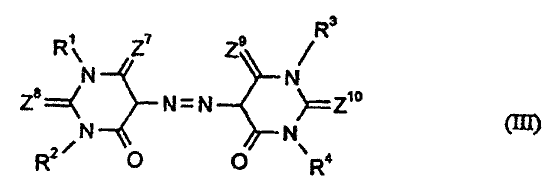 wherein
R¹, R², R³ and R⁴ independently of one another represent hydrogen, alkyl, in particular C₁-C₆-alkyl, cycloalkyl, in particular C₅-C₈-cycloalkyl, aryl, in particular optionally substituted phenyl, aralkyl or hetaryl,
B denotes the radical of an isoindoline of the formula 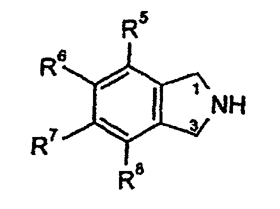 wherein the linkage with the two double bonds is in the 1-and 3-position of the isoindoline, and
R⁵, R⁶, R⁷ and R⁸ independently of one another represent hydrogen, halogen, in particular F, Cl and Br, C₁-C₆-alkyl, C₁-C₆-alkoxy or C₆-C₁₀-aryloxy,
A denotes the radical of a cyanomethylene of the formula 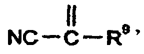 wherein
R⁹ represents an electron-withdrawing radical, and
Z¹ to Z¹⁰ independently of one another represent O or NR¹⁰,
wherein
R¹⁰ represents hydrogen or cyano
and
d) at least one organic solvent from the group consisting of:
aliphatic C₁-C₄-alcohols, such as methanol, ethanol, isopropanol, n-propanol, n-butanol, isobutanol or tert-butanol, aliphatic ketones, such as acetone, methyl ethyl ketone, methyl isobutyl ketone or diacetone alcohol, polyols, such as ethylene glycol, propylene glycol, butylene glycol, diethylene glycol, triethylene glycol, trimethylolpropane, polyethylene glycol having an average molecular weight of 100 to 4000, preferably 400 to 1500 g/mol, or glycerol, monohydroxy ethers, preferably monohydroxyalkyl ethers, particularly preferably mono-C₁-C₄-alkyl glycol ethers, such as ethylene glycol monoalkyl or monomethyl ethers, diethylene glycol monomethyl ether or diethylene glycol monoethyl ether, diethylene glycol monobutyl ether, dipropylene glycol monoethyl ether, thiodiglycol, or triethylene glycol monomethyl ether or monoethyl ether, and furthermore 2-pyrrolidone, N-methyl-2-pyrrolidone, N-ethyl-pyrrolidone, N-vinyl-pyrrolidone, 1,3-dimethyl-imidazolidone, dimethyl-acetamide and dimethylformamide.

11. Pigment preparations according to Claim 10, **characterized in that** the pigment of the formula (III) is present in the form of a salt or complex, as a solid solution, as an inclusion compound or as an intercalation compound.

12. Pigment preparations according to Claim 10, **characterized in that** the pigment of the formula (III) is present in the form of an inclusion compound or intercalation compound, the included compound being a cyclic or acyclic compound, preferably carboxamides or sulphonamides, urea or substituted ureas, and heterocyclic compounds, in particular 2,4,6-triamino-1,3,5-triazine, acetoguanamine and benzoguanamine.

## Revendications

1. Utilisation de préparations pigmentaires comme encres d'impression pour l'impression par jet d'encre, contenant
a) de l'eau
b) un agent dispersant et
c) au moins un pigment du groupe des acides barbituriques substitués par des radicaux contenant des groupes méthine ou azoïques ou leurs dérivés, ledit pigment étant présent éventuellement sous forme d'un sel, d'un complexe, comme solution solide, comme composé d'inclusion ou comme composé d'intercalation.

2. Utilisation selon la revendication 1, **caractérisée en ce qu'**on utilise comme composant
c) au moins un pigment de formules (I) à (III) ou leurs formes tautomères 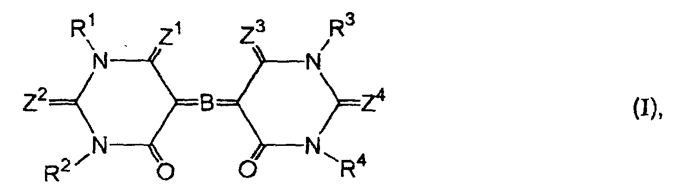 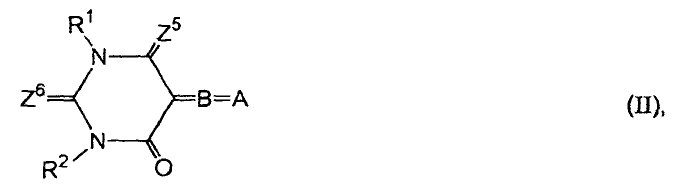 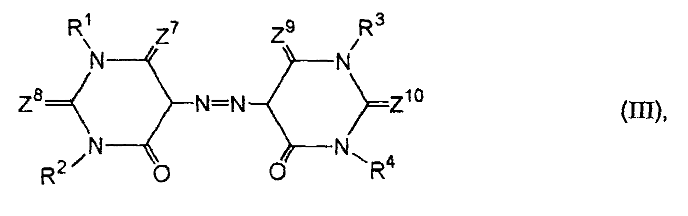 dans lesquelles
R¹, R², R³ et R⁴ indépendamment l'un de l'autre sont l'hydrogène, un radical alkyle, en particulier alkyle en C₁-C₆, cycloalkyle, en particulier cycloalkyle en C₅-C₈, aryle, en particulier phényle éventuellement substitué, aralkyle, ou hétéroaryle,
B signifie le radical d'une isoindoline de formule 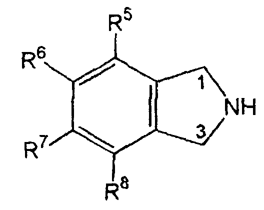 dans laquelle la jonction avec les deux doubles liaisons a lieu dans les positions 1 et 3 de l'isoindoline, et
R⁵, R⁶, R⁷ et R⁷ indépendamment l'un de l'autre sont l'hydrogène, un halogène, en particulier F, Cl et Br, un radical alkyle en C₁-C₆, alcoxy en C₁-C₆ ou aryloxy en C₆-C₁₀,
A est le radical d'un cyanométhylène de formule 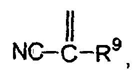 où
R⁹ est un radical attracteur d'électrons et
Z¹ à Z¹⁰ sont indépendamment l'un de l'autre O ou NR¹⁰, où
R¹⁰ est l'hydrogène ou un radical cyano.

3. Utilisation selon la revendication 1, **caractérisée en ce que** les pigments de formule (I) correspondent à la formule (IV) 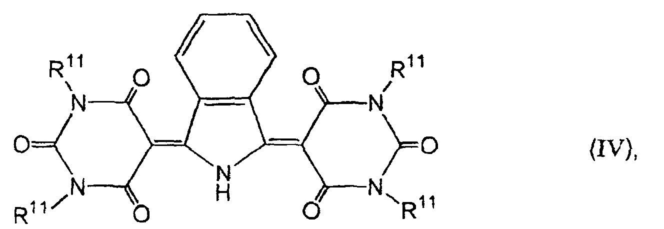 dans laquelle
R¹¹ signifie l'hydrogène, un radical alkyle en C₁-C₆ ou phényle.

4. Utilisation selon la revendication 1, **caractérisée en ce que** la préparation de pigment contient un pigment de formule

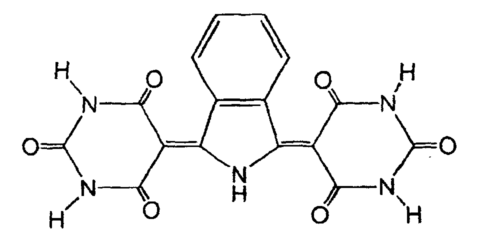

5. Utilisation selon la revendication 1, **caractérisée en ce que** les pigments de formule (II) correspondent à la formule (V) 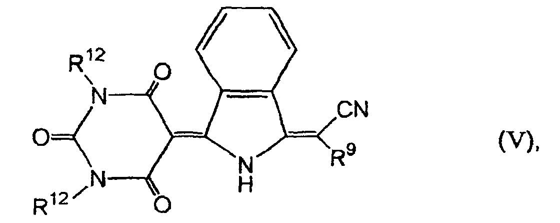 dans laquelle
R⁹ signifie CN, un radical aminocarbonyle, éventuellement substitué par un alkyle en C₁-C₆, cycloalkyle en C₅-C₇, aralkyle, en particulier aryl (en C₆-C₁₀)-alkyle (en C₁-C₄) ou aryle en C₆-C₁₀, en particulier CONHCH₃, un radical alcoxycarbonyle en C₁-C₆, aryloxycarbonyle en C₆-C₁₀, ou hétéroaryle, en particulier un radical de formule (VI) ou (VII), 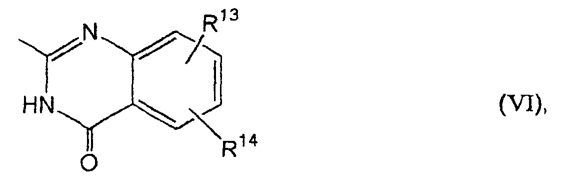 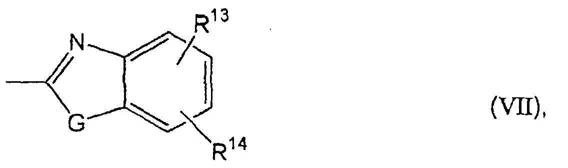 dans lesquelles
R¹³ et R¹⁴ signifient indépendamment l'un de l'autre l'hydrogène, un halogène, en particulier Cl, Br et F, un radical alkyle en C₁-C₆, alcoxy en C₁-C₆ ou alcoxy (en C₁-C₆)-carbonyle ou
R¹³ et R¹⁴ ensemble signifient un radical d'un noyau benzène condensé,
G est O, S, NH ou N(alkyle en C₁-C₄),
et
R¹² signifie l'hydrogène, un radical alkyle en C₁-C₆ ou phényle.

6. Utilisation selon la revendication 1, **caractérisée en ce que** le pigment de formule (I) correspond à la formule

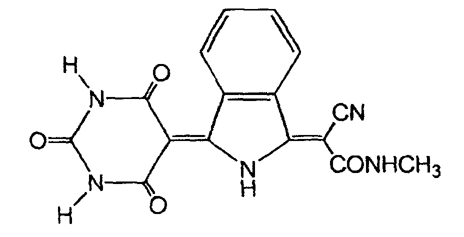

7. Utilisation selon la revendication 1, **caractérisée en ce que** le pigment de formule (III) correspond à la formule (VIII) ou (IX)

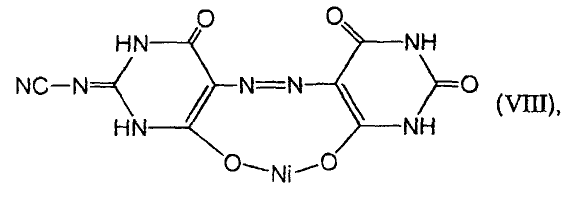

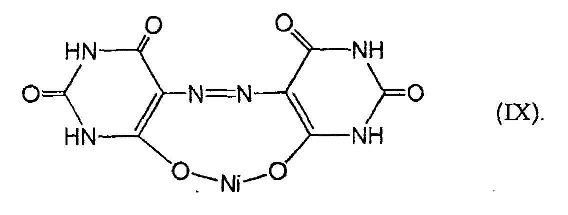

8. Utilisation selon la revendication 1, **caractérisée en ce que** le pigment de formule (III) est sous forme d'un sel, d'un complexe, comme solution solide, comme composé d'inclusion ou comme composé d'intercalation.

9. Utilisation selon la revendication 8, **caractérisée en ce que** le pigment de formule (III) est sous forme d'un composé d'inclusion ou d'un composé d'intercalation, le composé d'inclusion étant un composé cyclique ou non cyclique, de préférence un amide d'acide carboxylique ou amide d'acide sulfonique, l'urée ou l'urée substituée, ainsi que des composés hétérocycliques, en particulier la 2,4,6-triamino-1,3,5-triazine, l'acétoguanamine et la benzoguanamine.

10. Préparations pigmentaires contenant
a) de l'eau
b) un agent dispersant
c) au moins un pigment de formules (I) à (III) ou leurs formes tautomères 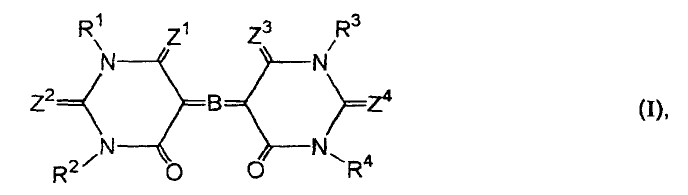 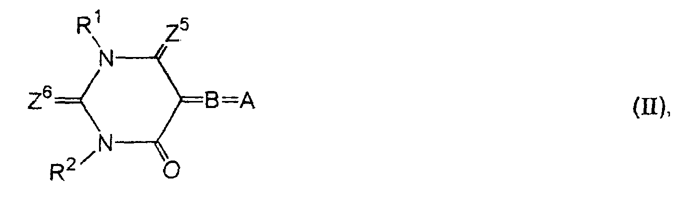 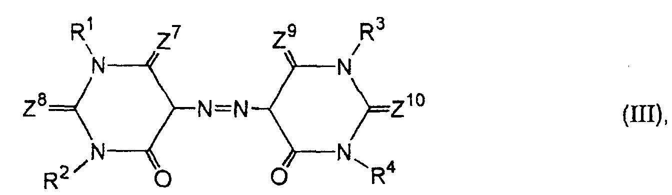 dans lesquelles
R¹, R², R³ et R⁴ indépendamment l'un de l'autre sont l'hydrogène, un radical alkyle, en particulier alkyle en C₁-C₆, cycloalkyle, en particulier cycloalkyle en C₅-C₈, aryle, en particulier phényle éventuellement substitué, aralkyle ou hétéroaryle,
B signifie le radical d'une isoindoline de formule 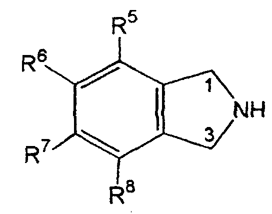 dans laquelle la jonction avec les deux doubles liaisons a lieu dans les positions 1 et 3 de l'isoindoline, et
R⁵, R⁶, R⁷ et R⁷ indépendamment l'un de l'autre sont l'hydrogène, un halogène, en particulier F, Cl et Br, un radical alkyle en C₁-C₆, alcoxy en C₁-C₆ ou aryloxy en C₆-C₁₀,
A est le radical d'un cyanométhylène de formule 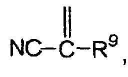 où
R⁹ est un radical attracteur d'électrons et
Z¹ à Z¹⁰ sont indépendamment l'un de l'autre O ou NR¹⁰, où
R¹⁰ est l'hydrogène ou un radical cyano,
et
d) au moins un solvant organique du groupe : des alcools aliphatiques en C₁-C₄, comme le méthanol, l'éthanol, l'isopropanol, le n-propanol, le n-butanol, l'isobutanol ou le tert-butanol, des cétones aliphatiques, comme l'acétone, la méthyléthylcétone, la méthylisobutylcétone ou l'alcool diacétonique, des polyols, comme l'éthylèneglycol, le propylèneglycol, le butylèneglycol, le diéthylèneglycol, le triéthylèneglycol, le triméthylolpropane, les polyéthylèneglycols ayant une masse moléculaire moyenne de 100 à 4000, de préférence 400 à 1500 g/mole, ou la glycérine, des éthers monohydroxylés, de préférence des éthers monohydroxyalkylés, plus préférablement des éthers de monoalkylglycol en C₁-C₄, comme les éthers de monoalkyle ou monométhyle d'éthylèneglycol, l'éther monométhytique de diéthylèneglycol ou l'éther monoéthylique de diéthylèneglycol, l'éther monobutylique de diéthylèneglycol, l'éther monoéthylique de dipropylèneglycol, le thiodiglycol, l'éther monométhylique ou l'éther monoéthylique de triéthylèneglycol, ainsi que la 2-pyrrolidone, la N-méthyl-2-pyrrolidone, la N-éthylpyrrolidone, la N-vinylpyrrolidone, la 1,3-diméthylimidazolidone, le diméthylacétamide et le diméthylformamide.

11. Préparations pigmentaires selon la revendication 10, **caractérisées en ce que** le pigment de formule (III) est sous forme d'un sel, d'un complexe, comme solution solide, comme composé d'inclusion ou comme composé d'intercalation.

12. Préparations pigmentaires selon la revendication 10, **caractérisées en ce que** le pigment de formule (III) est sous forme d'un composé d'inclusion ou d'un composé d'intercalation, le composé d'inclusion étant un composé cyclique ou non cyclique, de préférence un amide d'acide carboxylique ou amide d'acide sulfonique, l'urée ou l'urée substituée, ainsi que des composés hétérocycliques, en particulier la 2,4,6-triamino-1,3,5-triazine, l'acétoguanamine et la benzoguanamine.
